# FASCICULE DE BREVET EUROPEEN

(11) **EP 2 631 174 B1**
(45) Date de publication et mention de la délivrance du brevet: **15.03.2017**
(21) Numéro de dépôt: 13000285.0
(22) Date de dépôt: 21.01.2013
(51) Int. Cl.: B64C 27/12, B64C 27/82

(54) **Aéronef à voilure tournante muni d'un rotor arrière et procédé pour optimiser le fonctionnement d'un rotor arrière**
Drehflügelflugzeug, das mit einem Heckrotor ausgerüstet ist, und Verfahren zur Optimierung des Bertiebs eines Heckrotors
Rotary wing aircraft provided with a rear rotor, and method for optimising the operation of a rear rotor

(30) Priorité: 21.02.2012 FR 1200502
(43) Date de publication de la demande: 28.08.2013
(73) Titulaire: Airbus Helicopters, 13725 Marignane Cedex (FR)
(72) Inventeur: Dyrla, Nadine, F-13320 Bouc BEL AIR (FR)
(74) Mandataire: Pouillot, Laurent Pierre Paul

(56) Documents cités:
- EP-A1- 2 327 625
- US-A- 2 378 617
- US-A1- 2009 171 517
- US-A1- 2010 123 039

## Description

La présente invention concerne un aéronef à voilure tournante muni d'un rotor arrière, et un procédé pour optimiser le fonctionnement d'un rotor arrière.

Plus particulièrement, l'invention se situe dans le domaine technique des aéronefs à voilure tournante comportant un rotor arrière anticouple. Ce rotor arrière a pour fonction de contrecarrer le couple exercé par le rotor principal sur le fuselage, et de permettre le contrôle en lacet de l'aéronef.

Classiquement, un aéronef à voilure tournante peut comprendre une installation motrice entraînant en rotation un rotor principal de sustentation et un rotor arrière anticouple. Un tel aéronef peut comprendre une transmission mécanique incluant une boîte de transmission de puissance principale interposée entre l'installation motrice et le rotor principal.

Le rotor arrière peut alors être relié à l'installation motrice ou à la boîte de transmission de puissance principale, soit directement soit via une boîte de transmission arrière.

Les boîtes de transmission de puissance présentent souvent un rapport fixe de réduction de vitesse de rotation.

Dès lors, la vitesse de rotation du rotor principal et la vitesse de rotation du rotor arrière d'un aéronef à voilure tournante sont liées par un rapport figé par la transmission mécanique de cet aéronef.

De plus, des accessoires peuvent être connectés sur les boîtes de transmission de puissances d'aéronefs. Ces accessoires induisent donc des contraintes supplémentaires.

Le rotor principal et le rotor arrière ne sont par conséquent pas optimisés indépendamment l'un de l'autre. Le dimensionnement des rotors principal et arrière résulte alors d'un compromis choisi par le constructeur.

La transmission mécanique peut être réalisée pour permettre au rotor principal de fonctionner de manière optimisée afin d'assurer la sustentation de l'aéronef.

Le rotor arrière est alors par exemple dimensionné en fonction de cette transmission mécanique et d'une phase de vol pénalisante. Une telle phase de vol pénalisante peut correspondre à un vol stationnaire à une altitude maximale avec un vent latéral maximal et une masse maximale.

Cependant, ce rotor arrière risque donc d'avoir un rendement qui n'est pas optimisé durant les autres phases de vol. Cette situation est d'autant plus contraignante que la phase de vol pénalisante ayant servi au dimensionnement du rotor arrière risque d'être relativement peu mise en oeuvre durant la vie de l'aéronef.

Des boîtes de transmission de puissance mettant en oeuvre au moins deux rapports de réduction sont envisageables.

De telles boîtes de transmission de puissance offrent ainsi une plus grande liberté au constructeur. Toutefois, on comprend que les possibilités de dimensionnement demeurent réduites.

Le document US 2 378 617 propose un aéronef muni d'un rotor principal entraîné par une installation motrice via une boîte de transmission de puissance. De plus, l'aéronef comporte un rotor arrière pivotant à pale fixe entraîné par un moteur électrique.

Un pilote contrôle alors la vitesse de rotation du moteur électrique avec un premier moyen manuel, et la position du rotor arrière à l'aide d'un deuxième moyen manuel.

De même, le document US 2010/0123039 propose un aéronef comportant un rotor arrière à pale fixe, le rotor arrière étant entraîné par un moteur électrique.

Un capteur détermine la position d'un moyen de contrôle en lacet. Ce capteur communique alors avec une unité de régulation du moteur électrique. L'unité de régulation détermine par suite la vitesse et le sens de rotation du moteur électrique.

Dès lors, les documents US 2 378, US 2009 171 517 et US 2010/0123039 suggèrent d'utiliser un moteur électrique pour contrôler un rotor arrière à pales fixes.

Ainsi, le rotor principal et le rotor arrière d'un aéronef à voilure tournante peuvent être dimensionnés indépendamment l'un de l'autre. L'implémentation du moteur électrique permet en effet de supprimer le lien de dépendance entre le rotor arrière et le rotor principal

Toutefois, l'utilisation d'un moteur électrique semble difficile à mettre en oeuvre.

Pour atteindre une vitesse de consigne supérieure à une vitesse de rotation courante, la vitesse de rotation du moteur électrique doit être augmentée. Lors de l'accélération du moteur électrique, la vitesse de rotation du moteur électrique risque alors de dépasser la vitesse de consigne avant de se stabiliser à une valeur sensiblement égale à cette vitesse de consigne. L'homme du métier nomme parfois ce phénomène « dépassement de consigne ».

Ce phénomène de « dépassement de consigne » peut de plus être amplifié par des phénomènes aérodynamiques exercés sur le rotor arrière.

Ce phénomène de « dépassement de consigne » est parfois géré par une loi de régulation connue sous l'acronyme PID correspondant à l'expression « proportionnel intégral dérivée ».

En outre, l'ensemble comportant le moteur électrique et le rotor arrière peut parfois avoir une inertie en rotation non négligeable. Une telle inertie peut être préjudiciable pour contrer une rafale de vent soudaine et violente.

Le document US 2009/0140095 présente un aéronef à voilure tournante fonctionnant à uniquement à l'aide d'une énergie électrique.

L'aéronef comporte alors un rotor principal entraîné en rotation par un premier moteur électrique, et un rotor arrière entraîné en rotation par un deuxième moteur électrique.

Cet aéronef est muni d'un système de contrôle des rotors principal et arrière. Ce système de contrôle parait posséder un moyen de contrôle de la vitesse de rotation des rotors ainsi qu'un système de pilotage automatique.

Par ailleurs, certains aéronefs présentent un rotor arrière caréné. Un tel rotor arrière caréné est intéressant en raison de ses spécificités. Toutefois, un rotor arrière caréné et un rotor arrière non caréné se pilotent différemment.

Dès lors, un pilote habitué à manoeuvrer un aéronef muni d'un rotor arrière non caréné doit adapter son pilotage pour contrôler un aéronef muni d'un rotor arrière caréné. En effet, la courbe comportementale fournissant la poussée développée par un rotor arrière en fonction du déplacement d'un moyen de commande est relativement linéaire dans le cadre d'un rotor arrière non caréné contrairement à un rotor arrière caréné.

L'arrière plan technologique inclut aussi le document EP 2 327 625.

La présente invention a alors pour objet de proposer un aéronef permettant d'optimiser le dimensionnement et/ou le fonctionnement d'un rotor arrière, ce rotor arrière pouvant par exemple converger rapidement vers une consigne de fonctionnement.

L'invention concerne un aéronef à voilure tournante selon la revendication 1.

Par exemple, le dispositif de modification du pas comporte au moins une servocommande. Le moyen de commande peut alors inclure soit un moyen manuel tel qu'un palonnier, soit un moyen automatique d'élaboration d'un ordre de variation du pas du type pilote automatique, soit un moyen manuel et un moyen automatique d'élaboration d'un ordre de variation dudit pas.

Par ailleurs, l'aéronef inclut un moteur électrique pour mettre en rotation le rotor arrière et un moyen de régulation qui est relié au moyen de commande ainsi qu'au moteur électrique et au dispositif de modification du pas. Le moyen de régulation a pour fonction d'élaborer une première consigne de pas transmise au dispositif de modification du pas ainsi qu'une deuxième consigne de pilotage d'un paramètre moteur transmise au moteur électrique.

Le rotor arrière peut éventuellement être mis en mouvement selon un unique sens dextrorsum ou senestrorsum.

Toutefois, selon une variante, le rotor arrière peut éventuellement être mis en mouvement selon le sens dextrorsum et le sens senestrorsum. Le moyen de régulation peut alors élaborer une troisième consigne indiquant le sens de rotation du rotor arrière.

On comprend que le moteur électrique peut être redondé par sécurité.

L'aéronef permet alors un dimensionnement optimal du rotor principal et du rotor arrière en prévoyant deux systèmes d'entraînement distincts.

La vitesse de rotation de la boîte de transmission de puissance principale conditionne effectivement la vitesse de rotation du rotor principal. Toutefois, le fonctionnement du rotor arrière est conditionné au moins par un moteur électrique.

En outre, cet aéronef offre une grande souplesse d'utilisation.

En effet, la poussée exercée par le rotor arrière n'est pas pilotée uniquement par le moteur électrique, mais aussi par le biais du pas des pales de ce rotor arrière.

Ainsi, il est possible de limiter voire de supprimer le phénomène de « dépassement de consigne » précédemment décrit en pilotant en parallèle le moteur électrique et le pas des pales.

Par exemple, le moyen de régulation peut requérir une augmentation de la vitesse de rotation du moteur électrique pour atteindre une deuxième consigne, cette deuxième consigne étant donc une consigne de vitesse. Il est alors possible de modifier le pas des pales durant l'augmentation de la vitesse de rotation du moteur électrique pour éviter le phénomène de « dépassement de consigne ».

En outre, cet aéronef permet d'obtenir une réponse rapide ou lente du rotor arrière à un ordre en fonction de la situation.

En effet, le paramètre moteur faisant l'objet de la deuxième consigne peut être soit un couple développé par le moteur électrique soit une vitesse de rotation de ce moteur électrique.

Le couple développé par le moteur électrique étant fonction de l'intensité du courant électrique le traversant, une variation du couple du moteur électrique n'est pas inhibée par l'inertie de rotation de l'ensemble comprenant le moteur électrique et le rotor arrière. Une commande de pilotage très rapide peut donc être effectuée au moyen d'un asservissement en couple du moteur électrique. Par exemple, si un pilote agit rapidement sur un moyen de commande pour contrer une rafale de vent, cet ordre peut induire une deuxième consigne d'asservissement en couple du moteur électrique.

A l'inverse, une commande de pilotage très lente peut être effectuée au moyen d'un asservissement de la vitesse de rotation du moteur électrique.

Par ailleurs, l'invention présente un intérêt particulier pour les aéronefs pourvus d'un rotor arrière caréné, l'invention permettant de faire tendre le comportement d'un rotor arrière caréné vers le comportement d'un rotor arrière non caréné. En effet, en pilotant le moteur électrique et le pas des pales, il devient possible d'influer sur la courbe comportementale du rotor arrière caréné.

Selon un autre aspect, le moyen de régulation peut appliquer des lois de régulation mémorisées pour que le rotor arrière fonctionne toujours dans des plages d'utilisation induisant un rendement énergétique optimal.

Sur un aéronef classique, le rotor arrière fonctionne dans une plage de fonctionnement résultant du régime d'utilisation courant du rotor principal. Or, en fonction de la phase de vol, le rotor arrière et le rotor principal peuvent nécessiter des évolutions de puissances différentes voire antagonistes pour être chacun optimisés.

En dissociant le rotor arrière du rotor principal, il devient possible de faire fonctionner chaque rotor dans une plage lui étant adaptée.

Dans ces conditions, la marge de manoeuvre du moyen de régulation est d'autant plus grande que ce moyen de régulation n'agit pas que sur le moteur électrique mais aussi sur le pas des pales.

De plus, le fonctionnement du rotor arrière peut être gêné par des perturbations aérodynamiques. Dès lors, les lois de régulation du moteur électrique peuvent permettre de minimiser l'impact de ces perturbations.

Par ailleurs, l'aéronef peut comporter une ou plusieurs des caractéristiques qui suivent.

Cet aéronef peut notamment comporter un générateur électrique relié à ladite boîte de transmission de puissance pour alimenter électriquement le moteur électrique.

De plus, l'aéronef comporte éventuellement une batterie liée au générateur.

L'installation motrice entraîne alors la boîte de transmission de puissance principale qui met en mouvement le générateur. L'énergie électrique produite par le générateur est alors transmise au moteur électrique et/ou à la batterie le cas échéant. Cette batterie peut aussi alimenter électriquement le moteur électrique.

Selon un premier mode de réalisation, le rotor arrière peut être uniquement mis en mouvement à l'aide du moteur électrique.

Selon un deuxième mode de réalisation, l'aéronef comporte un système différentiel entraînant mécaniquement ledit rotor arrière, ledit moteur électrique coopérant avec ledit système différentiel, une transmission mécanique reliant ladite boîte de transmission de puissance audit système différentiel.

Le rotor arrière peut alors être entraîné soit mécaniquement via la boîte de transmission de puissance principale soit électriquement via le moteur électrique, soit mécaniquement et électriquement.

Lors d'un entraînement mécanique, le moteur électrique peut éventuellement fonctionner en mode générateur pour optimiser le fonctionnement du rotor arrière.

Indépendamment de la réalisation, le moteur électrique peut donc être un moteur/générateur électrique.

Par ailleurs, cet aéronef peut comporter des moyens de détermination d'une phase de vol courante de l'aéronef, ces moyens de détermination étant reliés au moyen de régulation.

Le moyen de régulation prend alors en considération la phase de vol pour faire fonctionner le rotor arrière dans une plage de fonctionnement à haut rendement énergétique.

Selon un autre aspect, l'aéronef peut comporter un système de détermination de la vitesse de variation dudit pas requise par le moyen de commande. Le paramètre piloté par la deuxième consigne est alors éventuellement choisi en fonction de cette vitesse de variation.

Outre un aéronef à voilure tournante, l'invention vise aussi un procédé, selon la revendication 9, pour optimiser le fonctionnement d'un rotor arrière d'un aéronef. L'aéronef est alors muni d'un rotor principal de sustentation et d'un rotor arrière, l'aéronef comprenant une installation motrice entraînant une boîte de transmission de puissance principale mettant en rotation le rotor principal, le rotor arrière étant pourvu d'une pluralité de pales à pas variable et d'un dispositif de modification du pas, l'aéronef ayant un moyen de commande du dispositif de modification du pas.

De plus, selon ce procédé on agence un moteur électrique pour mettre en rotation le rotor arrière et un moyen de régulation qui est relié au moyen de commande ainsi qu'au moteur électrique et au dispositif de modification du pas, le moyen de régulation mettant en oeuvre des instructions mémorisées pour élaborer au moins une première consigne de pas transmise au dispositif de modification du pas ainsi qu'au moins une deuxième consigne de pilotage d'un paramètre moteur transmise au moteur électrique et éventuellement au moins une troisième consigne indiquant le sens de rotation du rotor arrière.

Le moyen de régulation peut ainsi comprendre une unité de calcul et une mémoire, la mémoire contenant des instructions exécutées par l'unité de calcul pour élaborer la première consigne, la deuxième consigne et la troisième consigne le cas échéant, pour les transmettre aux organes concernés.

L'élaboration de ces consignes permet d'optimiser le fonctionnement du rotor arrière. Par exemple, il devient possible de faire tendre le comportement d'un rotor arrière caréné vers le comportement d'un rotor arrière non caréné.

Le moyen de régulation peut élaborer au moins une consigne de chaque type, ou encore une pluralité de consignes de chaque type.

Par exemple, le moyen de régulation peut comporter des instructions d'anticipation induisant le calcul d'une première consigne intermédiaire puis d'une première consigne finale pour affiner le comportement du rotor arrière. Ce procédé permet d'atteindre une consigne dite finale en passant par des points de fonctionnement intermédiaires optimisés.

Selon une variante, le moyen de régulation peut comporter au moins une loi de régulation indiquant la première consigne ainsi que la deuxième consigne et éventuellement une troisième consigne en fonction d'une poussée de consigne à atteindre, la poussée de consigne étant élaborée à partir d'un ordre provenant du moyen de commande.

Dans ces conditions, le constructeur établit par essais ou calcul une courbe de fonctionnement fournissant un pas optimal et un paramètre optimal en fonction d'une poussée de consigne du rotor arrière à fournir. A partir de la poussée de consigne à atteindre, le moyen de régulation en déduit les consignes à fournir en appliquant les instructions mémorisées dans sa mémoire.

La poussée de consigne peut être élaborée pour minimiser le bruit émis par le rotor arrière, optimiser la consommation de carburant, la durée du trajet, maximiser le rendement énergétique par exemple.

Selon une variante, on offre au pilote la possibilité de choisir des lois de régulation en fonction de l'objectif qu'il souhaite atteindre. Lors d'un vol dans une zone fortement peuplée, le pilote peut par exemple choisir des lois de régulation visant à minimiser le bruit émis, alors que dans des zones peu peuplée le pilote peut choisir des lois de régulations favorisant le rendement énergétique par exemple.

En outre, le moyen de régulation peut comporter au moins une loi de régulation en couple requérant une modification du couple développé par le moteur électrique et une loi de régulation en vitesse requérant une modification de la vitesse de rotation du moteur électrique.

Ce moyen de régulation peut alors mettre en oeuvre au moins une loi de régulation en couple lorsque le moyen de commande requiert une variation rapide de la poussée générée par le rotor arrière, et au moins une loi de régulation en vitesse lorsque le moyen de commande requiert une variation lente de la poussée générée par le rotor arrière.

On considère que ladite variation est rapide au delà d'un seuil déterminé par le constructeur, et lente en dessous de ce seuil.

Selon une variante, le moyen de régulation identifie une phase de vol courante de l'aéronef parmi une liste de phases de vol déterminée par le constructeur, chaque phase de vol déterminée étant associée à au moins une loi de régulation.

Ainsi, le moyen de régulation optimise le rendement du rotor arrière en prenant en considération les spécificités des diverses phases de vol.

Par exemple, le moyen de régulation détermine la première consigne et la deuxième consigne, voire une troisième consigne en :
- déterminant la phase de vol courante,
- déterminant une poussée théorique optimale associée à la phase de vol courante,
- déterminant une poussée de consigne égale à la somme de ladite poussée théorique et d'un écart de poussée requis par le moyen de commande,
- mettant en oeuvre au moins une loi de régulation pour déduire la première consigne, la deuxième consigne, et le cas échéant la troisième consigne à partir de la poussée de consigne.

L'invention et ses avantages apparaîtront avec plus de détails dans le cadre de la description qui suit avec des exemples de réalisations donnés à titre illustratif en référence aux figures annexées qui représentent :
- la figure 1, un aéronef selon un premier mode de réalisation,
- la figure 2, un aéronef selon un deuxième mode de réalisation,
- la figure 3, un schéma explicitant un procédé.

Les éléments présents dans plusieurs figures distinctes sont affectés d'une seule et même référence.

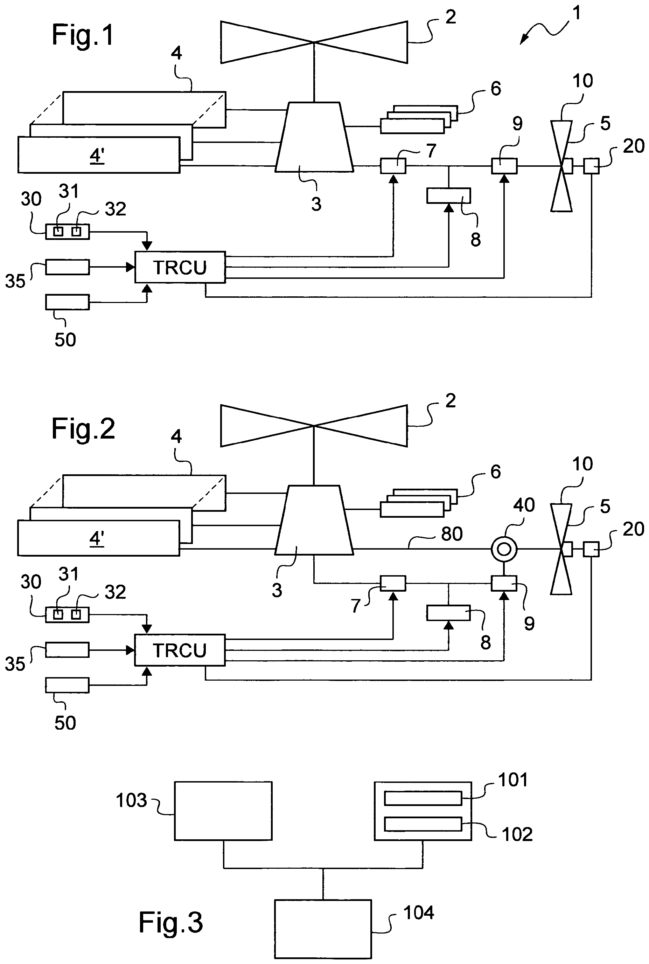

La figure 1 présente donc un aéronef 1 à voilure tournante selon un premier mode de réalisation.

Indépendamment du mode de réalisation, l'aéronef 1 comporte une installation motrice 4. Cette installation motrice 4 est équipée d'au moins un moteur, et notamment d'un moteur thermique 4'.

Cette installation motrice 4 met alors en mouvement une boîte de transmission de puissance principale 3. La boîte de transmission de puissance principale 3 entraîne en rotation un rotor principal 2 de sustentation, voire de propulsion, de la voilure tournante de l'aéronef. L'aéronef 1 peut donc être du type hélicoptère.

De plus, cette boîte de transmission de puissance peut entraîner des accessoires 6.

Par ailleurs, l'aéronef 1 est muni d'un rotor arrière 5 anticouple. Ce rotor arrière 5 inclut une pluralité de pales 10 pour contrer le couple généré par le rotor principal 2 sur le fuselage non représenté de l'aéronef.

Le pas I des pales 10 est variable. Dès lors, l'aéronef comporte un dispositif de commande 20 pour modifier en vol ce pas des pales 10, sur ordre d'un moyen de commande 30.

Un tel moyen de commande 30 peut comporter un moyen manuel 31 et/ ou un moyen automatique 32 pour élaborer un ordre de variation du pas des pales. Le moyen manuel 31 peut par exemple être un palonnier, le moyen automatique pouvant être un système de pilotage automatique.

Pour mettre en rotation le rotor arrière 5 indépendamment du rotor principal 2, l'aéronef comporte un moteur électrique 9.

Ce moteur électrique 9 peut être alimenté par un moyen de stockage 8 dénommé usuellement « batterie » et/ou un générateur 7 électrique.

Par exemple, le générateur 7 est en prise sur la boîte de transmission de puissance 3. La boîte de transmission de puissance 3 met en mouvement ce générateur 7 afin de produire de l'énergie électrique.

Le générateur 7 peut alimenter directement en énergie électrique le moteur électrique 9. De plus, le générateur 7 peut aussi alimenter électriquement le moyen de stockage 8, ce moyen de stockage étant relié au moteur électrique 9.

Dès lors, l'aéronef 1 comprend un moyen de régulation TRCU. Ce moyen de régulation TRCU peut comprendre une unité de calcul et une mémoire, l'unité de calcul exécutant les instructions stockées dans cette mémoire.

Ainsi, le moyen de régulation TRCU comporte une entrée reliée au moyen de commande 30.

De plus, le moyen de régulation TRCU comporte des sorties pour communiquer avec le dispositif de modification du pas 20, le moteur électrique 9, et éventuellement le générateur 7 et la batterie 8 via des liaisons filaires ou non filaires.

Par suite, le moyen de commande 30 envoie au moyen de régulation TRCU un ordre de variation de la poussée générée par le rotor arrière. Il est à noter qu'un moyen automatique 32 de commande peut être intégré au moyen de régulation TRCU.

A partir de cet ordre et en utilisant les instructions mémorisées dans sa mémoire, le moyen de régulation établit une première consigne de pas qu'il transmet au dispositif de modification du pas 20 et une deuxième consigne de pilotage d'un paramètre moteur qu'il transmet au moteur électrique 9. De plus, le moyen de régulation peut éventuellement établir une troisième consigne indiquant le sens de rotation du rotor arrière 5 qu'il transmet aussi au moteur électrique.

La deuxième consigne peut être une consigne de couple à développer par le moteur électrique 9, ou encore une consigne de vitesse de rotation de ce moteur électrique 9 et donc du rotor arrière 5.

Le moyen de régulation peut contrôler le générateur 7 et le moyen de stockage 8 pour garantir une alimentation électrique suffisante pour la manoeuvre du moteur électrique 9.

Pour déterminer les consignes à transmettre, le moyen de régulation TRCU peut comprendre au moins une loi de régulation à exécuter.

Au moins une loi de régulation peut indiquer la première consigne ainsi que la deuxième consigne et le cas échéant la troisième consigne en fonction d'une poussée de consigne P correspondante, la poussée de consigne P étant élaborée à partir d'un ordre provenant dudit moyen de commande 30.

Le constructeur peut établir un réseau de courbes dans un diagramme présentant le pas I des pales du rotor arrière en abscisse, et la poussée de consigne P à fournir en ordonnée. Chaque courbe du réseau correspond à une vitesse de rotation du moteur électrique et de fait du rotor arrière 5.

A partir de ce réseau de courbes, le constructeur peut établir une courbe de fonctionnement optimale répondant à des objectifs donnés, tels que la minimisation du bruit émis par le rotor arrière 5 ou encore la maximisation du rendement de ce rotor arrière 5.

A partir d'une poussée de consigne découlant d'un ordre de variation de poussée donné par le moyen de commande, on peut déduire de cette courbe de fonctionnement les consignes à émettre.

Pour optimiser le fonctionnement de l'aéronef et notamment du rotor arrière 5, au moins deux lois de régulation sont envisageables.

Le moyen de régulation peut par exemple comporter au moins une loi de régulation par paramètre moteur, soit : au moins une loi de régulation en couple requérant une modification du couple développé par le moteur électrique, et une loi de régulation en vitesse requérant une modification de la vitesse de rotation du moteur électrique.

En fonction de la vitesse de variation du pas requise par le moyen de commande, le moyen de régulation peut privilégier l'emploi d'une loi de régulation en couple ou d'une loi de régulation en vitesse.

A cet effet, l'aéronef peut comprendre un système de détermination 35 de la vitesse de variation dudit pas requise par le moyen de commande. Ce système de détermination 35 peut être d'un type usuel et communique avec le moyen de régulation TRCU.

En outre, la phase de vol courante peut aussi être prise en considération.

L'aéronef 1 comporte alors des moyens de détermination 50 d'une phase de vol courante de l'aéronef 1, ces moyens de détermination 50 étant reliés au moyen de régulation TRCU. Par exemple, on peut déterminer la phase de vol à l'aide de la vitesse d'avancement de l'aéronef et de l'altitude de l'aéronef.

Le moyen de régulation utilise alors les lois de régulation associées à la phase de vol courante.

En référence à la figure 3 et pour déterminer la poussée de consigne, le moyen de régulation peut identifier la phase de vol courante durant une étape 101.

A l'aide d'informations stockées dans sa mémoire, le moyen de régulation détermine durant une étape 102 une poussée théorique optimale associée à la phase de vol, et correspondant par exemple à un angle de lacet nul sans vent latéral. Cette poussée théorique peut être élaborée pour minimiser le bruit émis par le rotor arrière, optimiser la consommation de carburant, la durée du trajet, ou encore maximiser le rendement énergétique par exemple

En parallèle et durant une étape 103, le moyen de régulation détermine l'écart de poussée requis par le moyen de commande.

La poussée de consigne est alors égale à la somme de la poussée théorique et de l'écart de poussée requis.

A partir de cette poussée de consigne, durant une étape 104 le moyen de régulation établit les consignes à transmettre au moteur électrique 9 et au dispositif de modification du pas 20.

Selon le premier mode de réalisation de la figure 1, l'aéronef ne peut entraîner le rotor arrière 5 qu'avec l'aide du moteur électrique.

Selon le deuxième mode de réalisation, on agence un système différentiel 40 entre le moteur électrique 9 et le rotor arrière 5.

Une transmission mécanique 80 est alors disposée en parallèle du moteur électrique 9 entre le système différentiel 40 et la boîte de transmission de puissance 3.

Le rotor arrière peut donc être entraîné mécaniquement par la boîte de transmission de puissance 3 et/ ou électriquement par le moteur électrique 9.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) à voilure tournante muni d'un rotor principal (2) de sustentation et d'un rotor arrière (5), ledit aéronef (1) comprenant une installation motrice (4) muni d'au moins un moteur thermique (4') entraînant une boîte de transmission de puissance (3) principale, ladite boîte de transmission de puissance (3) principale entraînant ledit rotor principal (2), ledit rotor arrière (5) étant pourvu d'une pluralité de pales (10) à pas (I) variable et d'un dispositif de modification du pas (20), ledit aéronef (1) ayant un moyen de commande (30) dudit dispositif de modification du pas (20),
cet aéronef (1) incluant un moteur électrique (9) pour mettre en rotation ledit rotor arrière (5) et un moyen de régulation (TRCU), le moyen de régulation (TRCU) étant relié au moyen de commande (30) ainsi qu'au moteur électrique (9) et au dispositif de modification du pas (20) pour élaborer une première consigne de pas transmise au dispositif de modification du pas (20) ainsi qu'une deuxième consigne de pilotage d'un paramètre moteur transmise au moteur électrique (9), **caractérisé en ce que** ledit moyen de régulation (TRCU) exécutant au moins une loi de régulation indiquant la première consigne ainsi que la deuxième consigne en fonction d'une poussée de consigne (P) à atteindre, ladite poussée de consigne (P) étant élaborée à partir d'un ordre provenant dudit moyen de commande (30), afin de minimiser le bruit ou maximiser le rendement du rotor arrière.

2. Aéronef selon la revendication 1,
**caractérisé en ce que** ledit moyen de commande (30) inclut soit un moyen manuel (31), soit un moyen automatique (32) d'élaboration d'un ordre de variation dudit pas soit un moyen manuel (31) et un moyen automatique (32) d'élaboration d'un ordre de variation dudit pas.

3. Aéronef selon l'une quelconque des revendications 1 à 2,
**caractérisé en ce que** ledit aéronef (1) comporte un générateur électrique (7) relié à ladite boîte de transmission de puissance (3) pour alimenter électriquement ledit moteur électrique (9).

4. Aéronef selon la revendication 3,
**caractérisé en ce que** ledit aéronef (1) comporte une batterie (8) liée audit générateur (7).

5. Aéronef selon l'une quelconque des revendications 1 à 4,
**caractérisé en ce que** ledit aéronef (1) comporte un système différentiel (40) entraînant mécaniquement ledit rotor arrière (5), ledit moteur électrique (9) coopérant avec ledit système différentiel (40), une transmission mécanique (80) reliant ladite boîte de transmission de puissance (3) audit système différentiel (40).

6. Aéronef selon l'une quelconque des revendications 1 à 5,
**caractérisé en ce que** ledit moteur électrique (9) est moteur/générateur électrique.

7. Aéronef selon l'une quelconque des revendications 1 à 6,
**caractérisé en ce que** cet aéronef (1) comporte des moyens de détermination (50) d'une phase de vol courante de l'aéronef (1), lesdits moyens de détermination (50) étant reliés au moyen de régulation (TRCU).

8. Aéronef selon l'une quelconque des revendications 1 à 7,
**caractérisé en ce que** ledit aéronef (1) comporte un système de détermination (35) de la vitesse de variation dudit pas requise par le moyen de commande.

9. Procédé pour optimiser le fonctionnement d'un rotor arrière (5) d'un aéronef (1) à voilure tournante muni d'un rotor principal (2) de sustentation, ledit aéronef (1) comprenant une installation motrice (4) entraînant une boîte de transmission de puissance (3) principale mettant en rotation ledit rotor principal (2), ledit rotor arrière (5) étant pourvu d'une pluralité de pales (10) à pas (I) variable et d'un dispositif de modification du pas (20) de ces pales, ledit aéronef (1) ayant un moyen de commande (30) dudit dispositif de modification du pas (20),
dans lequel on agence un moteur électrique (9) pour mettre en rotation ledit rotor arrière (5) et un moyen de régulation (TRCU) qui est relié au moyen de commande (30) ainsi qu'au moteur électrique (9) et au dispositif de modification du pas (20), le moyen de régulation (TRCU) mettant en oeuvre des instructions mémorisées pour élaborer au moins une première consigne de pas transmise au dispositif de modification du pas ainsi qu'au moins une deuxième consigne de pilotage d'un paramètre moteur transmise au moteur électrique, **caractérisé en ce que** ledit moyen de régulation (TRCU) exécute au moins une loi de régulation indiquant la première consigne ainsi que la deuxième consigne en fonction d'une poussée de consigne (P) à atteindre, ladite poussée de consigne (P) étant élaborée à partir d'un ordre provenant dudit moyen de commande afin de minimiser le bruit ou maximiser le rendement du rotor arrière.

10. Procédé selon la revendication 9
**caractérisé en ce que** ledit moyen de régulation (TRCU) exécute au moins une loi de régulation en couple requérant une modification du couple développé par le moteur électrique (9) et une loi de régulation en vitesse requérant une modification de la vitesse de rotation du moteur électrique.

11. Procédé selon l'une quelconque des revendications 9 à 10,
**caractérisé en ce que** ledit moyen de régulation (TRCU) met en oeuvre au moins une loi de régulation en couple lorsque le moyen de commande requiert une variation rapide de la poussée générée par le rotor arrière (5), et au moins une loi de régulation en vitesse lorsque le moyen de commande requiert une variation lente de la poussée générée par le rotor arrière (5).

12. Procédé selon l'une quelconque des revendications 9 à 11,
**caractérisé en ce que** ledit moyen de régulation (TRCU) identifie une phase de vol courante de l'aéronef (1) parmi une liste de phases de vol prédéterminée par le constructeur, chaque phase de vol prédéterminée étant associée à au moins une loi de régulation.

13. Procédé selon l'une quelconque des revendications 9 à 12,
**caractérisé en ce que** ledit moyen de régulation détermine la première consigne et la deuxième consigne en :
- déterminant la phase de vol courante,
- déterminant une poussée théorique optimale associée à la phase de vol courante,
- déterminant une poussée de consigne égale à la somme de ladite poussée théorique et d'un écart de poussée requis par le moyen de commande,
- mettant en oeuvre au moins une loi de régulation pour déduire la première consigne et la deuxième consigne à partir de la poussée de consigne.

## Patentansprüche

1. Drehflügelflugzeug (1) mit einem Hauptrotor (2) für den Auftrieb und einem Heckrotor (5), wobei das Flugzeug (1) eine Antriebseinheit (4) mit mindestens einem Verbrennungsmotor (4') aufweist, der ein Hauptleistungsgetriebe (3) antreibt, wobei das Hauptleistungsgetriebe (3) den Hauptrotor (2) antreibt, wobei der Heckrotor (5) mit einer Mehrzahl von Rotorblättern (10) mit variablem Anstellwinkel (I) und mit einer Vorrichtung (20) zur Änderung des Anstellwinkels versehen ist, wobei das Flugzeug (1) ein Mittel (30) zur Steuerung der Vorrichtung (20) zur Änderung des Anstellwinkels aufweist, wobei das Flugzeug (1) einen elektrischen Motor (9) umfasst zum Drehen des Heckrotors (5) und ein Regelungsmittel (TRCU), wobei das Regelungsmittel (TRCU) mit dem Steuermittel (30) sowie mit dem elektrischen Motor (9) und mit der Vorrichtung (20) zur Änderung des Anstellwinkels verbunden ist, um einen ersten Sollwert des Anstellwinkels zu erstellen, der an die Vorrichtung (20) zur Änderung des Anstellwinkels übertragen wird, sowie einen zweiten Sollwert der Steuerung eines Motorparameters, der an den elektrischen Motor (9) übertragen wird,
**dadurch gekennzeichnet, dass** das Regelungsmittel (TRCU) mindestens eine Regelungsregel ausführt, die den ersten Sollwert angibt sowie den zweiten Sollwert in Abhängigkeit von einem zu erzielenden Solldruck (P), wobei der Solldruck (P) ausgehend von einer Reihenfolge erstellt wird, die von dem Steuermittel (30) kommt, um den Lärm zu minimieren oder die Leistung des Heckrotors zu maximieren.

2. Flugzeug nach Anspruch 1,
**dadurch gekennzeichnet, dass** das Steuermittel (30) entweder ein manuelles Mittel (31) oder ein automatisches Mittel (32) zur Erstellung einer Reihenfolge der Änderung des Anstellwinkels oder ein manuelles Mittel (31) und ein automatisches Mittel (32) zur Erstellung einer Reihenfolge der Änderung des Anstellwinkels umfasst.

3. Flugzeug nach einem der Ansprüche 1 bis 2,
**dadurch gekennzeichnet, dass** das Flugzeug (1) einen elektrischen Generator (7) aufweist, der mit dem Leistungsgetriebe (3) verbunden ist, um den elektrischen Motor (9) mit Strom zu versorgen.

4. Flugzeug nach Anspruch 3,
**dadurch gekennzeichnet, dass** das Flugzeug (1) eine mit dem Generator (7) verbundene Batterie (8) aufweist.

5. Flugzeug nach einem der Ansprüche 1 bis 4,
**dadurch gekennzeichnet, dass** das Flugzeug (1) ein Differentialsystem (40) aufweist, das den Heckrotor (5) mechanisch antreibt, wobei der Elektromotor (9) mit dem Differentialsystem (40) zusammenwirkt, wobei ein mechanisches Getriebe (80) das Leistungsgetriebe (3) mit dem Differentialsystem (40) verbindet.

6. Flugzeug nach einem der Ansprüche 1 bis 5,
**dadurch gekennzeichnet, dass** der elektrische Motor (9) ein elektrischer Motor/Generator ist.

7. Flugzeug nach einem der Ansprüche 1 bis 6,
**dadurch gekennzeichnet, dass** das Flugzeug (1) Mittel (50) zur Bestimmung einer aktuellen Flugphase des Flugzeugs (1) aufweist, wobei die Bestimmungsmittel (50) mit dem Regelungsmittel (TRCU) verbunden sind.

8. Flugzeug nach einem der Ansprüche 1 bis 7,
**dadurch gekennzeichnet, dass** das Flugzeug (1) ein System (35) zur Bestimmung der Geschwindigkeit der Änderung des Anstellwinkels, die von dem Steuermittel gefordert wird, aufweist.

9. Verfahren zur Optimierung des Betriebs eines Heckrotors (5) eines Drehflügelflugzeugs (1) mit einem Hauptrotor (2) für den Auftrieb, wobei das Flugzeug (1) eine Antriebseinheit (4) aufweist, die ein Hauptleistungsgetriebe (3) antreibt, welches den Hauptrotor (2) dreht, wobei der Heckrotor (5) mit einer Mehrzahl von Rotorblättern (10) mit variablem Anstellwinkel (I) und einer Vorrichtung (20) zur Änderung des Anstellwinkels dieser Rotorblätter versehen ist, wobei das Flugzeug (1) ein Mittel (30) zur Steuerung der Vorrichtung (20) zur Änderung des Anstellwinkels aufweist, bei dem ein elektrischer Motor (9) zum Drehen des Heckrotors (5) und ein Regelungsmittel (TRCU), das mit dem Steuermittel (30) sowie mit dem elektrischen Motor (9) und der Vorrichtung (20) zur Änderung des Anstellwinkels verbunden ist, vorgesehen sind, wobei das Regelungsmittel (TRCU) gespeicherte Befehle ausführt, um mindestens einen ersten Sollwert des Anstellwinkels zu erstellen, der an die Vorrichtung zur Änderung des Anstellwinkels übertragen wird, sowie mindestens einen zweiten Sollwert der Steuerung eines Motorparameters, der an den elektrischen Motor übertragen wird,
**dadurch gekennzeichnet, dass** das Regelungsmittel (TRCU) mindestens eine Regelungsregel ausführt, die den ersten Sollwert angibt sowie einen zweiten Sollwert in Abhängigkeit von einem zu erreichenden Solldruck (P), wobei der Solldruck (P) erstellt wird ausgehend von einer Reihenfolge, die von dem Steuermittel kommt, um den Lärm zu minimieren oder die Leistung des Heckrotors zu optimieren.

10. Verfahren nach Anspruch 9,
**dadurch gekennzeichnet, dass** das Regelungsmittel (TRCU) mindestens eine Regel der Drehmomentregelung ausführt, welche eine Änderung des von dem elektrischen Motor (9) entwickelten Drehmoments erfordert, und eine Regel zur Regelung der Drehgeschwindigkeit, welche eine Änderung der Drehgeschwindigkeit des elektrischen Motors erfordert.

11. Verfahren nach einem der Ansprüche 9 bis 10,
**dadurch gekennzeichnet, dass** das Regelungsmittel (TRCU) mindestens eine Regel zur Regelung des Drehmoments ausführt, wenn das Steuermittel eine schnelle Änderung des Schubs fordert, der von dem Heckrotor (5) erzeugt wird, und mindestens eine Regel der Regelung der Drehgeschwindigkeit, wenn das Steuermittel eine langsame Änderung des von dem Heckrotor (5) erzeugten Schubs fordert.

12. Verfahren nach einem der Ansprüche 9 bis 11,
**dadurch gekennzeichnet, dass** das Regelungsmittel (TRCU) eine aktuelle Flugphase des Flugzeugs (1) in einer Liste von von dem Konstrukteur vorbestimmten Flugphasen identifiziert, wobei jede vorbestimmte Flugphase mit mindestens einer Regel zur Regelung verbunden ist.

13. Verfahren nach einem der Ansprüche 9 bis 12,
**dadurch gekennzeichnet, dass** das Regelungsmittel den ersten Sollwert und den zweiten Sollwert bestimmt, indem:
- die aktuelle Flugphase bestimmt wird,
- ein theoretischer optimaler Schub, der mit der aktuellen Flugphase verbunden ist, bestimmt wird,
- ein Soll-Schub bestimmt wird, der gleich der Summe aus dem theoretischen Schub und einer Schubabweichung, die von dem Steuermittel gefordert wird, bestimmt wird,
- mindestens eine Regelungsregel ausgeführt wird, um den ersten Sollwert und den zweiten Sollwert, ausgehend von dem Soll-Schub, zu reduzieren.

## Claims

1. Rotary wing aircraft (1) provided with a main lift rotor (2) and with a rear rotor (5), said aircraft (1) comprising a power plant (4) provided with at least one heat engine (4') driving a main power transmission gearbox (3), said main power transmission gearbox (3) driving said main rotor (2), said rear rotor (5) being provided with a plurality of blades (10) of variable pitch (I) and with a pitch modification device (20), said aircraft (1) having a control means (30) for controlling said pitch modification device (20),
the aircraft (1) including an electric motor (9) for rotating said rear rotor (5) and a regulation means (TRCU), the regulation means (TRCU) being connected to the control means (30) and also to the electric motor (9) and to the pitch modification device (20) in order to generate a first setpoint for pitch transmitted to the pitch modification device (20) and also a second setpoint for controlling a motor parameter transmitted to the electric motor (9), **characterised in that** said regulation means (TRCU) executing at least one regulation relationship indicating the first setpoint and also the second setpoint as a function of a setpoint thrust (P) to be reached, said setpoint thrust (P) being generated from an order coming from said control means (30), in order to minimise the noise or maximise the efficiency of the rear rotor.

2. Aircraft according to claim 1,
**characterised in that** said control means (30) includes either a manual means (31) or an automatic means (32) for generating an order for varying said pitch or both a manual means (31) and an automatic means (32) for generating an order for varying said pitch.

3. Aircraft according to any one of claims 1 to 2,
**characterised in that** said aircraft (1) comprises an electric generator (7) connected to said power transmission gearbox (3) for electrically supplying said electric motor (9).

4. Aircraft according to claim 3,
**characterised in that** said aircraft (1) comprises a battery (8) connected to said generator (7).

5. Aircraft according to any one of claims 1 to 4,
**characterised in that** said aircraft (1) comprises a differential system (40) mechanically driving said rear rotor (5), said electric motor (9) cooperating with said differential system (40), a mechanical transmission (80) connecting said power transmission gearbox (3) to said differential system (40).

6. Aircraft according to any one of claims 1 to 5,
**characterised in that** said electric motor (9) is electric motor/generator.

7. Aircraft according to any one of claims 1 to 6,
**characterised in that** the aircraft (1) comprises determination means (50) for determining a current flight phase of the aircraft (1), said determination means (50) being connected to the regulation means (TRCU).

8. Aircraft according to any one of claims 1 to 7,
**characterised in that** said aircraft (1) comprises a determination system (35) for determining the speed of variation of said pitch required by the control means.

9. Method for optimising the operation of a rear rotor (5) of a rotary wing aircraft (1) provided with a main lift rotor (2), said aircraft comprising a power plant (4) driving a main power transmission gearbox (3) rotating said main rotor (2), said rear rotor (5) being provided with a plurality of blades (10) of variable pitch (I) and with a pitch modification device (20) for modifying the pitch (20) of the blades, said aircraft (1) having a control means (30) for controlling said pitch modification device (20),
in which an electric motor (9) is provided for rotating said rear rotor (5) and a regulation means (TRCU) which is connected to the control means (30) and also to the electric motor (9) and to the pitch modification device (20), the regulation means (TRCU) implementing stored instructions to generate at least one first pitch setpoint transmitted to the pitch modification device and also at least one second setpoint for controlling a motor parameter transmitted to the electric motor, **characterised in that** said regulation means (TRCU) executes at least one regulation relationship indicating the first setpoint and also the second setpoint as a function of a thrust setpoint (P) to be reached, said thrust setpoint (P) being generated from an order coming from said control means (30) in order to minimise the noise or maximise the efficiency of the rear rotor.

10. Method according to claim 9,
**characterised in that** said regulation means (TRCU) executes at least one torque regulation relationship requiring a modification of the torque developed by the electric motor (9) and a speed regulation relationship requiring a modification of the speed of rotation of the electric motor.

11. Method according to any one of claims 9 to 10,
**characterised in that** said regulation means (TRCU) implements at least one torque regulation relationship when the control means requires a fast variation of the thrust generated by the rear rotor (5), and at least one speed regulation relationship when the control means requires a slow variation of the thrust generated by the rear rotor (5).

12. Method according to any one of claims 9 to 11,
**characterised in that** said regulation means (TRCU) identifies a current flight phase of the aircraft (1) from a list of flight phases predetermined by the manufacturer, each predetermined flight phase being associated with at least one regulation relationship.

13. Method according to any one of claims 9 to 12,
**characterised in that** said regulation means determines the first setpoint and the second setpoint by:
- determining the current flight phase,
- determining an optimum theoretical thrust associated with the current flight phase,
- determining a setpoint thrust equal to the sum of said theoretical thrust and a thrust difference required by the control means,
- implementing at least one regulation relationship for deducing the first setpoint and the second setpoint from the setpoint thrust.
